# EUROPEAN PATENT APPLICATION

(11) **EP 4 848 054 A1**
(43) Date of publication of application: **02.12.2026**
(21) Application number: 24919896.1
(22) Date of filing: 28.11.2024
(51) Int. Cl.: G06F 3/0484

(54) **INFORMATION EXCHANGE METHOD AND APPARATUS, AND NON-VOLATILE COMPUTER READABLE STORAGE MEDIUM**

(30) Priority: 24.01.2024 CN 202410101117
(71) Applicant: Beijing Zitiao Network Technology Co., Ltd., Beijing 100190 (CN); Douyin Vision Co., Ltd., Beijing 100041 (CN)
(72) Inventor: ZHOU, Hanshu, Beijing 100028 (CN); GUO, Lei, Beijing 100028 (CN); LI, Qing, Beijing 100028 (CN)
(74) Representative: Grünecker Patent- und Rechtsanwälte PartG mbB
(86) International application number: PCT/CN2024/135152
(87) International publication number: WO 2025/156816

(57) **Abstract**

The present disclosure relates to an information interaction method and apparatus, and a non-transitory computer-readable storage medium, which relate to the field of computer technologies. The information interaction method includes: determining whether at least one remaining virtual object other than a virtual object combination owned by a user satisfies a second interaction complete condition of an information interaction in response to the virtual object combination owned by the user satisfying a first interaction complete condition of the information interaction; and feeding back virtual resource information corresponding to the second interaction complete condition to the user in response to the at least one remaining virtual object satisfying the second interaction complete condition.

## Description

### CROSS-REFERENCE TO RELATED APPLICATIONS

The present application is based on and claims priority to Chinese application No. 202410101117.2, filed on January 24, 2024, the disclosure of which is hereby incorporated into this application by reference in its entirety.

### TECHNICAL FIELD

The present disclosure relates to the field of computer technologies, and in particular, to an information interaction method, an information interaction apparatus, and a non-transitory computer-readable storage medium.

### BACKGROUND

In many information interaction applications, a scenario where a corresponding virtual resource acquired by collecting designated virtual objects (such as virtual cards, virtual models, images, or the like) is often involved. In the related arts, a user may participate in a card collection activity in some applications, for example; and after the user has collected cards designated by the activity, the user may exchange the cards for the corresponding virtual resource.

### SUMMARY

According to some embodiments of the present disclosure, an information interaction method is provided, including: determining whether at least one remaining virtual object other than a virtual object combination owned by a user satisfies a second interaction complete condition of an information interaction in response to the virtual object combination owned by the user satisfying a first interaction complete condition of the information interaction; and feeding back virtual resource information corresponding to the second interaction complete condition to the user in response to the at least one remaining virtual object satisfying the second interaction complete condition.

In some embodiments, the determining whether the at least one remaining virtual object other than the virtual object combination owned by the user satisfies the second interaction complete condition of the information interaction includes: determining whether the at least one remaining virtual object satisfies the second interaction complete condition according to a type of the at least one remaining virtual object and/or a quantity of the at least one remaining virtual object.

In some embodiments, the at least one remaining virtual object includes a plurality of remaining virtual objects belonging to different types, and the determining whether the at least one remaining virtual object other than the virtual object combination owned by the user satisfies the second interaction complete condition of the information interaction includes: determining that the at least one remaining virtual object satisfies the second interaction complete condition in response to the different types matching types designated by the second interaction complete condition.

In some embodiments, a quantity of types designated by the first interaction complete condition is greater than a quantity of the types designated by the second interaction complete condition.

In some embodiments, the at least one remaining virtual object includes a plurality of remaining virtual objects belonging to a same type, and the determining whether the at least one remaining virtual object other than the virtual object combination owned by the user satisfies the second interaction complete condition of the information interaction includes: determining that a second virtual object combination satisfies the second interaction complete condition in response to the same type matching a type designated by the second interaction complete condition and a quantity of the plurality of remaining virtual objects matching a quantity designated by the second interaction complete condition.

In some embodiments, the virtual resource information is determined according to a type of the at least one remaining virtual object and/or a quantity of the at least one remaining virtual object.

In some embodiments, the at least one remaining virtual object includes a plurality of remaining virtual objects belonging to a same type, and the virtual resource information includes multiple information for multiplying a virtual resource corresponding to the first interaction complete condition and sending the virtual resource corresponding to the first interaction complete condition to the user.

In some embodiments, the at least one remaining virtual object includes a plurality of remaining virtual objects belonging to different types, and the virtual resource information includes quantity information for sending a virtual resource corresponding to the quantity information to the user.

In some embodiments, the feeding back the virtual resource information corresponding to the second interaction complete condition to the user includes: displaying an interaction participation control to the user for a selection to trigger sending of a virtual resource corresponding to the virtual resource information to the user, in response to the at least one remaining virtual object satisfying the second interaction complete condition.

In some embodiments, the virtual resource information includes at least one of sending time information, processing progress information of a virtual resource corresponding to the second interaction complete condition, or image information of the at least one remaining virtual object.

In some embodiments, the sending time information includes a plurality of time points for the user for a selection to trigger sending of the virtual resource at a time point selected by the user.

According to other embodiments of the present disclosure, an information interaction apparatus is provided, including: a determining unit configured to determine whether at least one remaining virtual object other than a virtual object combination owned by a user satisfies a second interaction complete condition of an information interaction in response to the virtual object combination owned by the user satisfying a first interaction complete condition of the information interaction; and a feedback unit configured to feed back virtual resource information corresponding to the second interaction complete condition to the user in response to the at least one remaining virtual object satisfying the second interaction complete condition.

In some embodiments, the determining unit determines whether the at least one remaining virtual object satisfies the second interaction complete condition according to a type of the at least one remaining virtual object and/or a quantity of the at least one remaining virtual object.

In some embodiments, the at least one remaining virtual object includes a plurality of remaining virtual objects belonging to different types, and the determining unit determines that the at least one remaining virtual object satisfies the second interaction complete condition in response to the different types matching types designated by the second interaction complete condition.

In some embodiments, a quantity of types designated by the first interaction complete condition is greater than a quantity of the types designated by the second interaction complete condition.

In some embodiments, the at least one remaining virtual object includes a plurality of remaining virtual objects belonging to a same type, and the determining unit determines that a second virtual object combination satisfies the second interaction complete condition in response to the same type matching a type designated by the second interaction complete condition and a quantity of the plurality of remaining virtual objects matching a quantity designated by the second interaction complete condition.

In some embodiments, the virtual resource information is determined according to a type of the at least one remaining virtual object and/or a quantity of the at least one remaining virtual object.

In some embodiments, the at least one remaining virtual object includes a plurality of remaining virtual objects belonging to a same type, and the virtual resource information includes multiple information for multiplying a virtual resource corresponding to the first interaction complete condition and sending the virtual resource corresponding to the first interaction complete condition to the user.

In some embodiments, the at least one remaining virtual object includes a plurality of remaining virtual objects belonging to different types, and the virtual resource information includes quantity information for sending a virtual resource corresponding to the quantity information to the user.

In some embodiments, the feedback unit displays an interaction participation control to the user for a selection to trigger sending of a virtual resource corresponding to the virtual resource information to the user, in response to the at least one remaining virtual object satisfying the second interaction complete condition.

In some embodiments, the virtual resource information includes at least one of sending time information, processing progress information of a virtual resource corresponding to the second interaction complete condition, or image information of the at least one remaining virtual object.

In some embodiments, the sending time information includes a plurality of time points for the user for a selection to trigger sending of the virtual resource at a time point selected by the user.

According to still other embodiments of the present disclosure, an information interaction apparatus is provided, including: a memory; and a processor coupled to the memory, the processor configured to, based on instructions stored in the memory, perform an information interaction method according to any one of the embodiments described above.

According to yet other embodiments of the present disclosure, a non-transitory computer-readable storage medium is provided, on which a computer program is stored, where an information interaction method according to any one of the embodiments described above is implemented when the program is executed by a processor.

According to yet other embodiments of the present disclosure, a computer program product is provided, including instructions that, when executed by a processor, cause the processor to perform an information interaction method according to any one of the embodiments described above

### BRIEF DESCRIPTION OF THE DRAWINGS

The drawings, which constitute a part of the description, illustrate embodiments of the present disclosure and, together with the description, serve to explain the principles of the present disclosure.

The present disclosure may be understood more clearly from the following detailed description with reference to the drawings:
Fig. 1 illustrates a flowchart of some embodiments of an information interaction method according to the present disclosure;
Figs. 2a to 2h illustrate schematic diagrams of some embodiments of an information interaction interface according to the present disclosure;
Figs. 3a to 3b illustrate schematic diagrams of some other embodiments of an information interaction interface according to the present disclosure;
Fig. 4 illustrates a block diagram of some embodiments of an information interaction apparatus according to the present disclosure;
Fig. 5 illustrates a block diagram of some other embodiments of an information interaction apparatus according to the present disclosure; and
Fig. 6 illustrates a block diagram of still other embodiments of an information interaction apparatus according to the present disclosure.

### DETAILED DESCRIPTION

Various exemplary embodiments of the present disclosure will now be described in detail with reference to the drawings. It should be noted that the relative arrangement of components and steps, numerical expressions, and numerical values set forth in these embodiments do not limit the scope of the present disclosure unless specifically stated otherwise.

Meanwhile, it should be understood that, for ease of description, the dimensions of various parts shown in the drawings are not drawn to an actual proportional relationship.

The following description of at least one exemplary embodiment is merely illustrative and is in no way intended to limit the present disclosure and its application or use.

Technologies, methods, and devices known to those of ordinary skill in the relevant art may not be discussed in detail, but where appropriate, the technologies, methods, and devices should be considered as part of the description.

In all examples shown and discussed herein, any specific value should be construed as merely exemplary and not as a limitation. Therefore, other examples of the exemplary embodiments may have different values.

It should be noted that similar reference numerals and letters denote similar items in the following drawings, and thus, once an item is defined in one drawing, it is not necessary to discuss the item further in subsequent drawings.

The inventors of the present disclosure have found that the above related arts have the following problems: after a user exchanges a designated virtual object for a virtual resource, many virtual objects may remain and cannot be consumed, resulting in a low completion rate of an information interaction and a poor information interaction effect.

In view of this, the present disclosure provides an information interaction solution, which may effectively use the remaining virtual objects of the user to perform the information interaction, improve the completion rate of the information interaction, and thus improve the effect of information interaction.

As described above, in a process where a user collects a virtual object combination designated by an information interaction complete condition by drawing virtual objects, the user may often acquire a plurality of repeated virtual objects of a same type, so that the user has a plurality of remaining virtual objects other than the designated virtual object combination. In this way, after the user exchanges the designated virtual object combination for the virtual resource, many remaining virtual objects still cannot be consumed, resulting in a low completion rate of the information interaction and the poor information interaction effect.

The present disclosure provides an information interaction solution for the above technical problems, which may be implemented through the following embodiments.

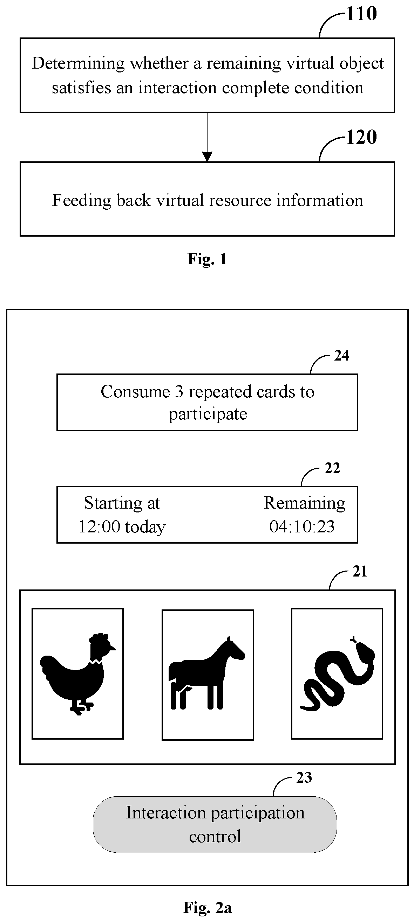

Fig. 1 illustrates a flowchart of some embodiments of an information interaction method according to the present disclosure.

As shown in Fig. 1, in step 110, determining whether at least one remaining virtual object other than a virtual object combination owned by a user satisfies a second interaction complete condition of an information interaction in response to the virtual object combination owned by the user satisfying a first interaction complete condition of the information interaction.

In some embodiments, the first interaction complete condition may include instructing the user to collect a designated virtual object combination, and the designated virtual object combination may include a plurality of virtual objects belonging to different designated types.

For example, the virtual objects of different types may be virtual cards corresponding to different Chinese zodiac signs. The first interaction complete condition instructs the user to collect a first virtual card combination including 12 virtual cards corresponding to the 12 Chinese zodiac signs. In response to the user owning the first virtual card combination, it may be determined that the user satisfies the first interaction complete condition.

In some embodiments, it is determined whether the at least one remaining virtual object satisfies the second interaction complete condition according to a type of the at least one remaining virtual object and/or a quantity of the at least one remaining virtual object.

For example, the user acquires a plurality of repeated virtual cards in a process of collecting the first virtual card combination, resulting in that the user owns a plurality of remaining virtual cards other than the first virtual card combination; and the second interaction complete condition may include instructing the user to collect a designated type and/or a designated quantity of virtual cards for consuming the remaining virtual cards. Compared with the first interaction complete condition, the second interaction complete condition is easier to achieve (for example, the virtual object of the designated type is easier to acquire, the designated quantity is less, or the like).

In this way, the remaining virtual objects of the user may be effectively used to perform the information interaction, and the completion rate of the information interaction may be improved, thereby improving the effect of the information interaction.

In some embodiments, the at least one remaining virtual object includes a plurality of remaining virtual objects belonging to different types. The at least one remaining virtual object is determined to satisfy the second interaction complete condition in response to the different types matching types designated by the second interaction complete condition. For example, a quantity of types designated by the first interaction complete condition is greater than a quantity of the types designated by the second interaction complete condition.

For example, the second interaction complete condition instructs the user to collect a second virtual card combination including 3 virtual cards corresponding to 3 Chinese zodiac signs. In response to the remaining virtual cards owned by the user being capable of forming the second virtual card combination, it may be determined that the user satisfies the second interaction complete condition.

In some embodiments, the at least one remaining virtual object includes a plurality of remaining virtual objects belonging to a same type. The second virtual object combination is determined to satisfy the second interaction complete condition in response to the same type matching a type designated by the second interaction complete condition and a quantity of the plurality of remaining virtual objects matching a quantity designated by the second interaction complete condition.

For example, the second interaction complete condition instructs the user to collect a second virtual card combination including 3 identical virtual cards corresponding to a same designated Chinese zodiac sign. In response to the remaining virtual cards owned by the user being capable of forming the second virtual card combination, it may be determined that the user satisfies the second interaction complete condition.

In this way, compared with the first interaction complete condition, the second interaction complete condition is easier to achieve, and the remaining virtual objects of the user may be effectively used to perform the information interaction, thereby improving the completion rate of the information interaction and the effect of the information interaction.

In step 120, feeding back virtual resource information corresponding to the second interaction complete condition to the user in response to the at least one remaining virtual object satisfying the second interaction complete condition.

In the above embodiments, in a case where the user satisfies the interaction complete condition, it is further determined whether the remaining virtual objects satisfy another interaction complete condition. In this way, the remaining virtual objects of the user may be effectively used to perform the information interaction, and the completion rate of the information interaction may be improved, thereby improving the effect of the information interaction.

In some embodiments, the virtual resource information includes at least one of sending time information, processing progress information, or image information of the at least one remaining virtual object of a virtual resource corresponding to the second interaction complete condition.

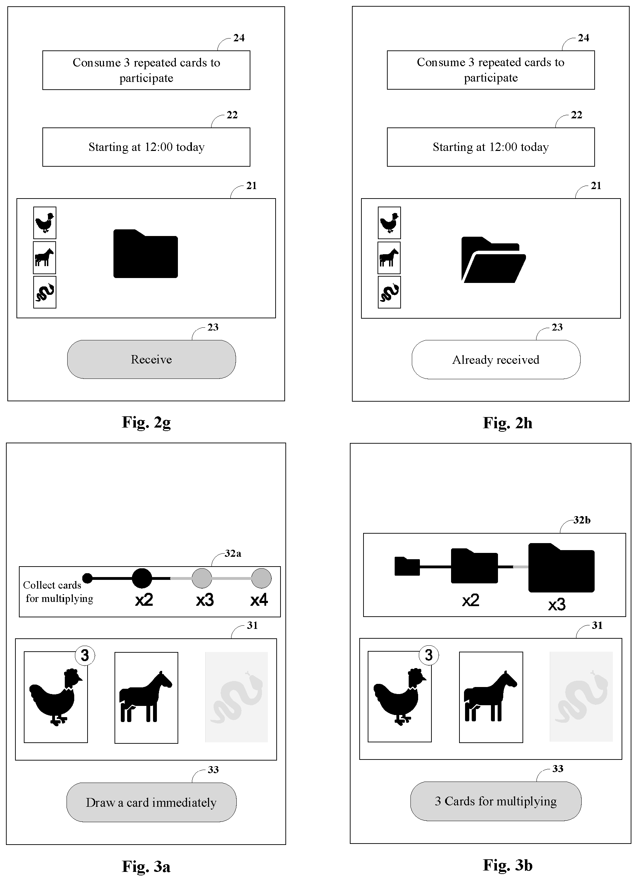

For example, the virtual resource information may be fed back to the user through the embodiments in Figs. 2a to 2h.

Figs. 2a to 2h illustrate schematic diagrams of some embodiments of an information interaction interface according to the present disclosure.

As shown in Fig. 2a, the information interaction interface may include an image display area 21 for displaying a virtual object combination corresponding to the second interaction complete condition, such as the second virtual card combination. For example, the second interaction complete condition instructs the user to collect virtual cards corresponding to a chicken, a horse, and a snake, and the remaining virtual cards owned by the user include these virtual cards, then the image display area 21 may display image information corresponding to these virtual cards.

For example, the information interaction interface may include a first information display area 22 for displaying sending time information of the virtual resource corresponding to the second interaction complete condition. For example, the first information display area 22 may display time information of sending the virtual resource by a platform providing the virtual resource to the user, including a time of sending the virtual resource, countdown information, or the like.

In some embodiments, the information interaction interface may further include a second information display area 24 for displaying the second interaction complete condition. For example, the second information display area 24 displays "Consume 3 repeated cards to participate", and in combination with the virtual object combination displayed in the image display area 21, the second interaction complete condition may be transmitted to the user.

In some embodiments, in response to the at least one remaining virtual object satisfying the second interaction complete condition, an interaction participation control is displayed to the user for selection to trigger sending of a virtual resource corresponding to the virtual resource information to the user.

For example, the information interaction interface may further include the interaction participation control 23. The interaction participation control 23 may display thereon prompt information for prompting the user to select the control to participate in a virtual resource allocation.

In some embodiments, the sending time information includes a plurality of time points for the user for a selection to trigger sending of the virtual resource at a time point selected by the user.

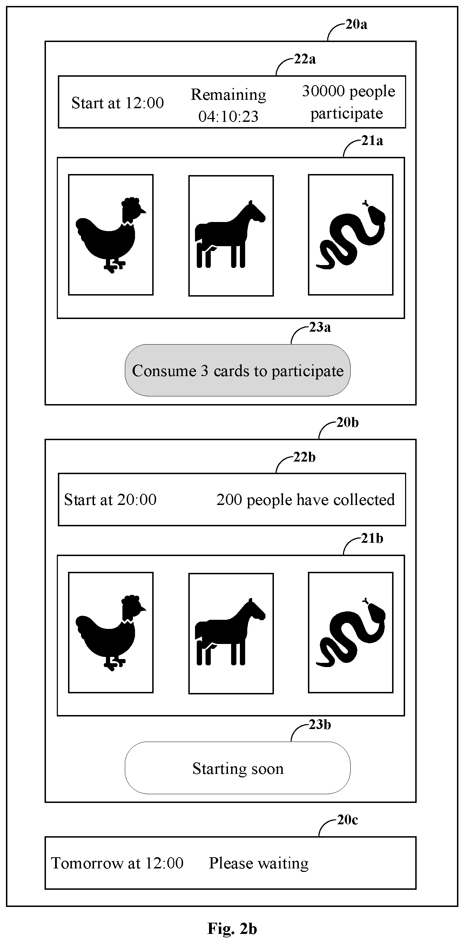

For example, the plurality of time points may be displayed to the user through the embodiments in Fig. 2b.

As shown in Fig. 2b, the information interaction interface includes information display areas 20a, 20b, and 20c, which are respectively used to display 3 virtual resource sending time points corresponding to the second interaction complete condition.

In the information display area 20a, the first information display area 22a may display a first time point of participating in the virtual resource allocation corresponding to the second interaction complete condition and a quantity of users participating at the first time point; and the interaction participation control 23a may further display a participation condition of the virtual resource allocation corresponding to the second interaction complete condition.

In the information display area 20b, the first information display area 22b may further display a second time point of participating in the virtual resource allocation corresponding to the second interaction complete condition and a quantity of users satisfying the second interaction complete condition; and the interaction participation control 23b may further display related information of the second time point.

In the information display area 20c, a third time point of participating in the virtual resource allocation corresponding to the second interaction complete condition may be displayed.

In this way, the user may select a participation time point according to the user's own situation, thereby improving the effect of the information interaction.

In some embodiments, in response to the user clicking on the interaction participation control 23 in Fig. 2a, it is determined that the user participates in the virtual resource allocation corresponding to the second interaction complete condition.

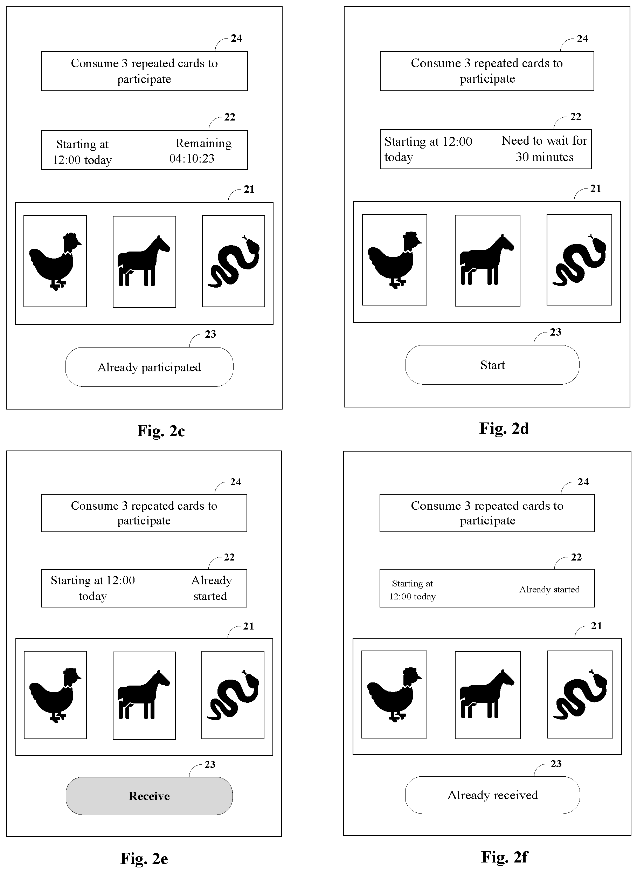

As shown in Fig. 2c, in response to the user participating in the virtual resource allocation corresponding to the second interaction complete condition, the interaction participation control 23 may be switched from the style in Fig. 2a to the style in Fig. 2c (display attributes such as colors, fonts, and shapes of the two styles are different); and the interaction participation control 23 may display participation state information of the user, such as "Already participated".

As shown in Fig. 2d, in response to arrival of the time point of sending the virtual resource, the first information display area 22 may display time information required for verifying whether the user satisfies the second interaction complete condition, such as "Need to wait for 30 minutes"; and the interaction participation control 23 may display processing progress information corresponding to the second interaction complete condition, such as "Start".

As shown in Fig. 2e, in response to the user passing the verification on the second interaction complete condition, the interaction participation control 23 may display prompt information for prompting the user to confirm reception of the virtual resource, such as "Receive".

As shown in Fig. 2f, in response to the user confirming reception of the virtual resource, the interaction participation control 23 may display prompt information for prompting the user that the virtual resource is sent , such as "Already received".

For example, the display styles of the interaction participation control 23 in Fig. 2e and Fig. 2f may be different to prompt the user of the sending situation of the virtual resource.

As shown in Fig. 2g, in response to the user passing the verification on the second interaction complete condition, the image display area 21 may display a prompt image for prompting the user that the reception of the virtual resource has not been confirmed yet. The second virtual card combination may also be displayed in the image display area 21 after being zoomed out.

As shown in Fig. 2f, in response to the user confirming reception of the virtual resource, the image display area 21 may display a prompt image for prompting the user that the virtual resource is sent. The second virtual card combination may also be displayed in the image display area 21 after being zoomed out.

In some embodiments, the virtual resource information is determined according to a type of the at least one remaining virtual object and/or a quantity of the at least one remaining virtual object.

For example, the at least one remaining virtual object includes a plurality of remaining virtual objects belonging to a same type, and the virtual resource information includes multiple information for multiplying a virtual resource corresponding to the first interaction complete condition and sending the virtual resource corresponding to the first interaction complete condition to the user. The above technical solutions may be implemented through the embodiments in Figs. 3a to 3b.

Figs. 3a to 3b illustrate schematic diagrams of some other embodiments of an information interaction interface according to the present disclosure.

As shown in Figs. 3a to 3b, the information interaction interface may include an image display area 31 for displaying type information and quantity information of virtual objects corresponding to the satisfaction of the second interaction complete condition, such as 3 virtual cards corresponding to a chicken.

For example, in response to a virtual card that has not been acquired by the user, the virtual card may be displayed in a designated style. For example, a mask with a certain transparency is overlaid on the virtual card corresponding to a snake in the image display area 31 to prompt the user that the virtual card has not been acquired yet.

For example, the first information display area 32a may display multiple information corresponding to the user satisfying the second interaction complete condition. In response to the user owning 3 virtual cards corresponding to the chicken, the first information display area 32a may display that the multiple information corresponding to the 3 virtual cards is 2 times, that is, the virtual resource corresponding to the first interaction complete condition may be multiplied by 2 and then sent to the user.

For example, the first information display area 32a may use different styles to respectively display multiple information corresponding to the second interaction complete condition that satisfied by the user and multiple information corresponding to the second interaction complete condition that not satisfied by the user. As shown in Fig. 3a, the multiple information of being satisfied and the multiple information of not being satisfied are different in color.

As shown in Fig. 3b, in the first information display area 32a, different multiple information may be displayed in different styles, for example, a larger multiple corresponds to a larger icon.

For example, the interaction participation control 33 may display prompt information for prompting the user to continue to participate in the virtual resource allocation corresponding to the second interaction complete condition, such as "Draw a card immediately", or prompt the user of the second interaction complete condition, such as "3 cards for doubling".

In some embodiments, the at least one remaining virtual object includes a plurality of remaining virtual objects belonging to different types, and the virtual resource information includes quantity information for sending a virtual resource corresponding to the quantity information to the user.

For example, the second interaction complete condition instructs the user to collect virtual cards corresponding to a chicken, a horse, and a snake; and in response to the remaining virtual cards owned by the user including these virtual cards, a corresponding number of virtual resources of a quantity corresponding to the second interaction complete condition are sent to the user.

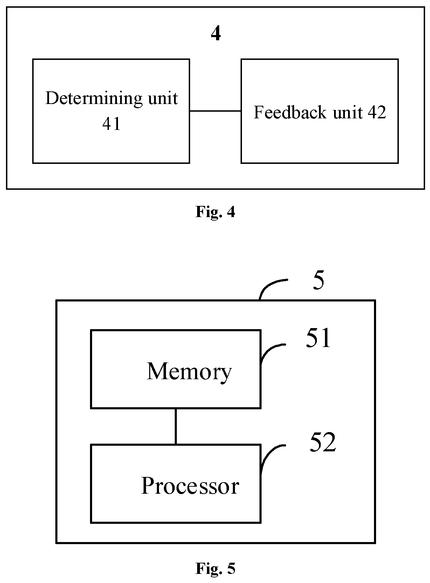

Fig. 4 illustrates a block diagram of some embodiments of an information interaction apparatus according to the present disclosure.

As shown in Fig. 4, the information interaction apparatus 4 includes: a determining unit 41 configured to determine whether at least one remaining virtual object other than a virtual object combination owned by a user satisfies a second interaction complete condition of an information interaction in response to the virtual object combination owned by the user satisfying a first interaction complete condition of the information interaction; and a feedback unit 42 configured to feed back virtual resource information corresponding to the second interaction complete condition to the user in response to the at least one remaining virtual object satisfying the second interaction complete condition.

In some embodiments, the determining unit 41 determines whether the at least one remaining virtual object satisfies the second interaction complete condition according to a type of the at least one remaining virtual object and/or a quantity of the at least one remaining virtual object.

In some embodiments, the at least one remaining virtual object includes a plurality of remaining virtual objects belonging to different types, and the determining unit 41 determines that the at least one remaining virtual object satisfies the second interaction complete condition in response to the different types matching types designated by the second interaction complete condition.

In some embodiments, a quantity of types designated by the first interaction complete condition is greater than a quantity of the types designated by the second interaction complete condition.

In some embodiments, the at least one remaining virtual object includes a plurality of remaining virtual objects belonging to a same type, and the determining unit 41 determines that a second virtual object combination satisfies the second interaction complete condition in response to the same type matching a type designated by the second interaction complete condition and a quantity of the plurality of remaining virtual objects matching a quantity designated by the second interaction complete condition.

In some embodiments, the virtual resource information is determined according to a type of the at least one remaining virtual object and/or a quantity of the at least one remaining virtual object.

In some embodiments, the at least one remaining virtual object includes a plurality of remaining virtual objects belonging to a same type, and the virtual resource information includes multiple information for multiplying a virtual resource corresponding to the first interaction complete condition and sending the virtual resource corresponding to the first interaction complete condition to the user.

In some embodiments, the at least one remaining virtual object includes a plurality of remaining virtual objects belonging to different types, and the virtual resource information includes quantity information for sending a virtual resource corresponding to the quantity information to the user.

In some embodiments, the feedback unit 42 displays an interaction participation control to the user for a selection to trigger sending of a virtual resource corresponding to the virtual resource information to the user, in response to the at least one remaining virtual object satisfying the second interaction complete condition,.

In some embodiments, the virtual resource information includes at least one of sending time information, processing progress information of a virtual resource corresponding to the second interaction complete condition, or image information of the at least one remaining virtual object.

In some embodiments, the sending time information includes a plurality of time points for the user for a selection to trigger sending of the virtual resource at a time point selected by the user.

Fig. 5 illustrates a block diagram of some other embodiments of an information interaction apparatus according to the present disclosure.

As shown in Fig. 5, the information interaction apparatus 5 in this embodiment includes: a memory 51 and a processor 52 coupled to the memory 51, where the processor 52 is configured to, based on instructions stored in the memory 51, perform an information interaction method according to any one of the embodiments of the present disclosure.

The memory 51 may include, for example, a system memory, a fixed non-transitory storage medium, or the like. The system memory stores, for example, an operating system, an application program, a boot loader Boot Loader, a database, and other programs.

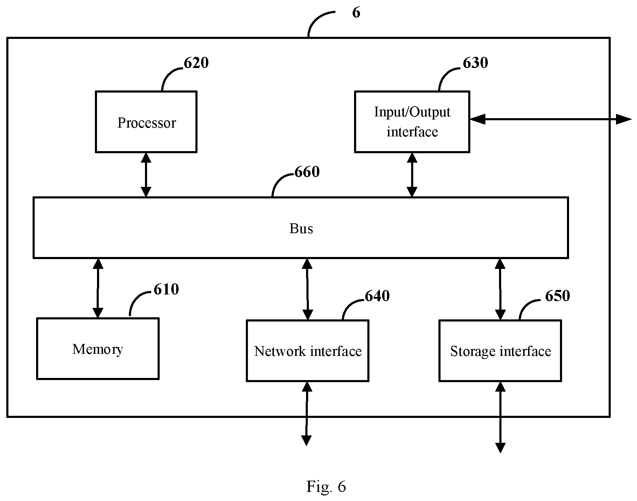

Fig. 6 illustrates a block diagram of still other embodiments of an information interaction apparatus according to the present disclosure.

As shown in Fig. 6, the information interaction apparatus 6 in this embodiment includes: a memory 610 and a processor 620 coupled to the memory 610, where the processor 620 is configured to, based on instructions stored in the memory 610, perform an information interaction method according to any one of the embodiments described above.

The memory 610 may include, for example, a system memory, a fixed non-transitory storage medium, or the like. The system memory stores, for example, an operating system, an application program, a boot loader Boot Loader, and other programs.

The information interaction apparatus 6 may further include an input/output interface 630, a network interface 640, a storage interface 650, and the like. These interfaces 630, 640, 650, the memory 610, and the processor 620 may be connected, for example, through a bus 660. The input/output interface 630 provides a connection interface for input/output devices such as a display, a mouse, a keyboard, a touch screen, a microphone, and a speaker. The network interface 640 provides a connection interface for various networked devices. The storage interface 650 provides a connection interface for external storage devices such as an SD card and a USB flash disk.

It should be understood by those skilled in the art that the embodiments of the present disclosure may be provided as a method, a system, or a computer program product. Therefore, the present disclosure may take a form of an entire hardware embodiment, an entire software embodiment, or an embodiment containing both hardware and software elements. Furthermore, the present disclosure may take a form of a computer program product embodied on one or more computer-usable non-transitory storage media having computer-usable program code embodied therein, including, but not limited to, a disk memory, a CD-ROM, an optical memory, and the like.

Thus far, the information interaction method, the information interaction apparatus, and the non-transitory computer-readable storage medium according to the present disclosure have been described in detail. To avoid obscuring the concept of the present disclosure, some details known in the art are not described. Those skilled in the art may fully understand how to implement the technical solutions disclosed herein based on the above description.

The method and system of the present disclosure may be implemented in many ways. For example, the method and system of the present disclosure may be implemented by software, hardware, firmware, or any combination of software, hardware, and firmware. The above order of steps for the method is only for illustration, and the steps of the method of the present disclosure are not limited to the order specifically described above, unless otherwise specified. In addition, in some embodiments, the present disclosure may also be implemented as programs recorded on a recording medium, where these programs include machine-readable instructions for implementing the method according to the present disclosure. Therefore, the present disclosure also covers a recording medium storing programs for performing the method according to the present disclosure.

Although some specific embodiments of the present disclosure have been described in detail by way of examples, those skilled in the art should understand that the above examples are only for illustration and are not intended to limit the scope of the present disclosure. Those skilled in the art should understand that the above embodiments may be modified without departing from the scope and spirit of the present disclosure. The scope of the present disclosure is defined by the appended claims.

## Claims

1. An information interaction method, comprising:
determining whether at least one remaining virtual object other than a virtual object combination owned by a user satisfies a second interaction complete condition of an information interaction in response to the virtual object combination owned by the user satisfying a first interaction complete condition of the information interaction; and
feeding back virtual resource information corresponding to the second interaction complete condition to the user in response to the at least one remaining virtual object satisfying the second interaction complete condition.

2. The information interaction method of claim 1, wherein the determining whether the at least one remaining virtual object other than the virtual object combination owned by the user satisfies the second interaction complete condition of the information interaction comprises:
determining whether the at least one remaining virtual object satisfies the second interaction complete condition according to a type of the at least one remaining virtual object and/or a quantity of the at least one remaining virtual object.

3. The information interaction method of claim 2, wherein the at least one remaining virtual object comprises a plurality of remaining virtual objects belonging to different types, and
the determining whether the at least one remaining virtual object other than the virtual object combination owned by the user satisfies the second interaction complete condition of the information interaction comprises:
determining that the at least one remaining virtual object satisfies the second interaction complete condition in response to the different types matching types designated by the second interaction complete condition.

4. The information interaction method of claim 3, wherein a quantity of types designated by the first interaction complete condition is greater than a quantity of the types designated by the second interaction complete condition.

5. The information interaction method of any of claims 2-4, wherein the at least one remaining virtual object comprises a plurality of remaining virtual objects belonging to a same type, and
the determining whether the at least one remaining virtual object other than the virtual object combination owned by the user satisfies the second interaction complete condition of the information interaction comprises:
determining that a second virtual object combination satisfies the second interaction complete condition in response to the same type matching a type designated by the second interaction complete condition and a quantity of the plurality of remaining virtual objects matching a quantity designated by the second interaction complete condition.

6. The information interaction method of any of claims 1-5, wherein the virtual resource information is determined according to a type of the at least one remaining virtual object and/or a quantity of the at least one remaining virtual object.

7. The information interaction method of claim 6, wherein the at least one remaining virtual object comprises a plurality of remaining virtual objects belonging to a same type, and the virtual resource information comprises multiple information for multiplying a virtual resource corresponding to the first interaction complete condition and sending the virtual resource corresponding to the first interaction complete condition to the user.

8. The information interaction method of claim 6 or 7, wherein the at least one remaining virtual object comprises a plurality of remaining virtual objects belonging to different types, and the virtual resource information comprises quantity information for sending a virtual resource corresponding to the quantity information to the user.

9. The information interaction method of any of claims 1-8, wherein the feeding back the virtual resource information corresponding to the second interaction complete condition to the user comprises:
displaying an interaction participation control to the user for a selection to trigger sending of a virtual resource corresponding to the virtual resource information to the user, in response to the at least one remaining virtual object satisfying the second interaction complete condition.

10. The information interaction method of any of claims 1-9, wherein the virtual resource information comprises at least one of sending time information, processing progress information of a virtual resource corresponding to the second interaction complete condition, or image information of the at least one remaining virtual object.

11. The information interaction method of claim 10, wherein the sending time information comprises a plurality of time points for the user for a selection to trigger sending of the virtual resource at a time point selected by the user.

12. An information interaction apparatus, comprising:
a determining unit configured to determine whether at least one remaining virtual object other than a virtual object combination owned by a user satisfies a second interaction complete condition of an information interaction in response to the virtual object combination owned by the user satisfying a first interaction complete condition of the information interaction; and
a feedback unit configured to feed back virtual resource information corresponding to the second interaction complete condition to the user in response to the at least one remaining virtual object satisfying the second interaction complete condition.

13. An information interaction apparatus, comprising:
a memory; and
a processor coupled to the memory, the processor configured to, based on instructions stored in the memory, perform an information interaction method of any of claims 1-11.

14. A non-transitory computer-readable storage medium having a computer program stored thereon, wherein an information interaction method of any of claims 1-11 is implemented when the program is executed by a processor.

15. A computer program product comprising instructions that, when executed by a processor, cause the processor to perform an information interaction method of any of claims 1-11.
